# EUROPÄISCHE PATENTSCHRIFT

(11) **EP 1 786 678 B1**
(45) Veröffentlichungstag und Bekanntmachung des Hinweises auf die Patenterteilung: **31.10.2007**
(21) Anmeldenummer: 05784813.7
(22) Anmeldetag: 09.08.2005
(51) Int. Cl.: B65B 35/18, B65B 35/50, B65G 47/91

(54) **VERFAHREN ZUM UMSETZEN EINES PRODUKTES IN EINER VERPACKUNGSMASCHINE UND UMSETZVORRICHTUNG ZUR DURCHFÜHRUNG DES VERFAHRENS**
METHOD FOR TRANSFERRING A PRODUCT IN A PACKAGING MACHINE AND TRANSFER DEVICE FOR CARRYING OUT SAID METHOD
PROCEDE POUR TRANSFERER UN PRODUIT DANS UNE MACHINE D'EMBALLAGE ET DISPOSITIF DE TRANSFERT PERMETTANT DE METTRE EN OEUVRE CE PROCEDE

(30) Priorität: 08.09.2004 DE 102004043332
(43) Veröffentlichungstag der Anmeldung: 23.05.2007
(73) Patentinhaber: IWK Verpackungstechnik GmbH, 76297 Stutensee (DE)
(72) Erfinder: HÄHNEL, Bernd, 76297 Stutensee (DE); HIELTSCHER, Uwe, 76351 Linkenheim-Hochstetten (DE); HORNUNG, Martin, 76689 Karlsdorf-Neuthard (DE)
(74) Vertreter: Lasch, Hartmut
(86) Internationale Anmeldenummer: PCT/EP2005/008618
(87) Internationale Veröffentlichungsnummer: WO 2006/027073

(56) Entgegenhaltungen:
- EP-A- 0 466 660
- DE-A1- 10 014 986
- GB-A- 2 172 257
- US-A- 4 460 302
- US-A- 6 070 385

## Beschreibung

Die Erfindung betrifft eine Umsetzvorrichtung zum Umsetzen eines Produktes in einer Verpackungsmaschine, wobei das Produkt mittels der Umsetzvorrichtung an einem Bereitstellungsplatz aufnehmbar und an einem Ablegeplatz ablegbar ist und die Umsetzvorrichtung einen 1. schwenkbaren Umsetzarm und einen 2. schwenkbaren Umsetzarm umfasst, die jeweils eine Halteeinrichtung für das Produkt aufweisen.

Darüber hinaus betrifft die Erfindung ein Verfahren zum Umsetzen eines Produktes in einer Verpackungsmaschine, wobei das Produkt mittels einer Umsetzvorrichtung an einem Bereitstellungsplatz aufgenommen und an einem Ablegeplatz abgelegt wird und die Umsetzvorrichtung einen 1. schwenkbaren Umsetzarm und einen 2. schwenkbaren Umsetzarm umfasst, die jeweils eine Haltevorrichtung für das Produkt aufweisen.

Eine solche Umsetzvorrichtung und ein solches Verfahren zum Umsetzen sind aus GB-A-2 172 257 bekannt.

Im Folgenden soll beispielhaft von dem Umsetzen eines Blisters in einer Blister-Verpackungsmaschine ausgegangen werden, jedoch ist die Erfindung darauf nicht beschränkt.

In einer Blister-Verpackungsmaschine werden in einer endlosen Folienbahn eine Vielzahl von Näpfen ausgebildet, in die jeweils ein oder mehrere Produkte eingelegt werden, bei denen es sich beispielsweise um Pharmazeutika, insbesondere Tabletten oder Dragees, handeln kann. Anschließend wird eine Deckfolie aufgesiegelt, die die Produkte in den Näpfen dicht einschließt. Das auf diese Weise gebildete endlose Blisterband wird in einer Stanz- oder Schneideinheit in Blisterstreifen (im Folgenden Blister genannt) unterteilt.

Bei einer aus der WO 00/68086 bekannten Blister-Verpakkungsmaschine wird der Blister mittels einer Umsetzvorrichtung umgesetzt, die zwei nebeneinander angeordneten Schwenkarme aufweist.

Jeder Schwenkarm kann einen Blister an einem Bereitstellungsplatz aufnehmen; wobei für jeden Schwenkarm ein eigener Bereitstellungsplatz vorgesehen ist und die Bereitstellungsplätze nebeneinander in einer Stanzeinheit liegen. Jeder Schwenkarm legt den aufgenommenen Blister auf einem eigenen weiterführenden Transportband ab, wobei die Blister mit gegenseitigem Versatz in Transportrichtung auf den Transportbändern angeordnet sind. Anschließend werden die Blister auf ein gemeinsames weiterführendes Transportband übergeben und so der Verpackungseinheit zugeführt.

Insbesondere bei der Verpackung von Medikamenten ist es in vielen Fällen notwendig und üblich, mehrere Blister in eine Faltschachtel oder eine andere Umverpackung einzufüllen. Zu diesem Zweck muss aus den einzelnen Blistern ein Stapel mit einer entsprechenden Anzahl von Blistern gebildet werden, der dann in die Faltschachtel oder die andere Umverpackung verpackt wird. Zur Bildung des Stapels ist eine spezielle Stapeleinheit vorgesehen, die am Ende des Förderbandes angeordnet ist. Unmittelbar vor der Stapeleinheit werden diejenigen Blister, die als unvollständig und/oder undicht erkannt wurden, aussortiert und es wird eine Anwesenheitskontrolle der Blister durchgeführt. Auf diese Weise ist es sowohl gerätetechnisch als auch handhabungstechnisch relativ aufwendig, bis ein Stapel aus einer gewünschten Anzahl von Blistern gebildet ist und an eine nachgeschaltete Kartoniervorrichtung übergeben werden kann. Darüber hinaus sind bei der Änderung des Blisterformates eine Vielzahl von Anpassungen und Umstellungen vorzusehen, wodurch die Stillstandszeiten der Verpackungsmaschine erhöht sind.

Die DE 199 17 436 C2 beschreibt ebenfalls eine Vorrichtung zum Umsetzen eines Blisters auf eine Fördervorrichtung. Die Umsetzvorrichtung ist als Absenkvorrichtung ausgebildet, welche das Stanzwerkzeug durchgreift, so dass die Blister auf der unterhalb des Stanzwerkzeugs verlaufende Fördervorrichtung abgelegt werden. Nachteilig ist insbesondere die zum Umsetzen des Blisters erforderliche relativ lange Taktzeit, da das Stanzwerkzeug blockiert ist, während der Blister nach unten auf die Fördervorrichtung umgesetzt wird.

Der Erfindung liegt die Aufgabe zugrunde, eine Umsetzvorrichtung und ein Verfahren der genannten Art zu schaffen, mit der bzw. dem ein Umsetzen der Blister in einfacher und schneller Weise in hoher Taktzeit erreicht werden kann.

Hinsichtlich der Vorrichtung wird die oben genannte Aufgabe durch eine Umsetzvorrichtung mit den kennzeichnenden Merkmalen des Anspruchs 1 gelöst. Dabei ist vorgesehen, dass der 1. schwenkbare Umsetzarm und der 2. schwenkbare Umsetzarm auf unterschiedlichen Bahnkurven unter Ausführung reversierender, hin- und hergehender Schwenkbewegungen zwischen einer Übernahmeposition am gemeinsamen Bereitstellungsplatz und an einer Abgabeposition am gemeinsamen Ablegeplatz verstellbar sind und bei ihrer Verstellbewegung aneinander vorbeilaufen.

Erfindungsgemäß nimmt jeder Umsetzarm den Blister an einem einzigen, gemeinsamen Bereitstellungsplatz mittels seiner Halteeinrichtung auf, bei der es sich um eine Saugeinrichtung mit zumindest einem Sauger handeln kann, wobei sich der Umsetzarm in seiner Übernahmeposition befindet. Der Umsetzarm schwenkt dann in seine Abgabeposition an einem einzigen, für beide Umsetzarme gemeinsamen Ablegeplatz, woraufhin die Halteeinrichtung gelöst und der Blister freigegeben und dadurch abgelegt wird. Anschließend schwenkt der Umsetzarm auf der gleichen Bewegungsbahn zurück, d.h. jeder Umsetzarm führt eine reversierende, hin- und hergehende Schwenkbewegung zwischen der Übernahmeposition am Bereitstellungsplatz und der Abgabeposition am Ablegeplatz aus. Die Bewegungen der Umsetzarme sind dabei um vorzugsweise einen halben Arbeitstakt zueinander versetzt, d.h. wenn sich der eine Umsetzarm in seiner Übernahmeposition am gemeinsamen Bereitstellungsplatz befindet, ist der andere Umsetzarm in oder nahe seiner Abgabeposition am gemeinsamen Ablegeplatz angeordnet. Es ist jedoch auch möglich, dass die Bewegungen der Umsetzarme um etwa 1/3 oder etwa 2/5 eines Arbeitstaktes zueinander versetzt sind.

Wenn die Umsetzarme aus ihrer Übernahmeposition in ihre Abgabeposition bzw. aus ihrer Abgabeposition zurück zur Übernahmeposition verschwenkt werden, bewegen sie sich auf unterschiedlichen Bahnkurven, so dass sie sich gegenseitig ausweichen bzw. aneinander vorbeilaufen. Auf diese Weise ist eine Umsetzvorrichtung geschaffen, mit der abwechselnd Blister von dem 1. bzw. 2. Umsetzarm aufgenommen und an dem Ablegeplatz abgelegt werden. Am Ablegeplatz, bei dem es sich vorzugsweise um eine Zelle einer weiterführenden Fördervorrichtung handelt, kann entweder jeder einzelne Blister abtransportiert werden, es ist jedoch auch möglich, zunächst einen Blisterstapel aufzubauen und diesen dann abzutransportieren.

Die unterschiedlichen Bahnkurven bei der Verschwenkung bzw. Verstellung der Umsetzarme werden in bevorzugter Ausgestaltung der Erfindung dadurch erreicht, dass jeder Umsetzarm um eine 1. Achse und um eine dazu im Wesentlichen senkrecht verlaufende 2. Achse schwenkbar ist. Die Schwenkung um die 1. Achse dient der Überbrückung des Abstandes zwischen dem Bereitstellungsplatz und dem Ablegeplatz, wobei die beiden 1. Achsen der beiden Umsetzarme vorzugsweise parallel zueinander verlaufen. Die Schwenkung um die 2. Achse dient vorzugsweise der Ausrichtung und exakten Positionierung des Blisters, weshalb vorzugsweise vorgesehen ist, dass die 2. Achsen in Längsrichtung des jeweiligen Umsetzarms oder parallel dazu verlaufen. Wenn ein Blister mittels der Halteeinrichtung des Umsetzarms am Bereitstellungsplatz aufgenommen wurde, schwenkt der Umsetzarm um seine 1. Achse und bewegt sich dadurch in Richtung des Ablegeplatzes. Gleichzeitig wird der Arm um seine 2. Achse geschwenkt, wodurch der Blister mit dem Umsetzarm um vorzugsweise etwa 180° gedreht und somit in seiner Ausrichtung so verändert wird, dass er nach Erreichen des Ablegeplatzes dort abgelegt werden kann.

Eine exakte Bewegungssteuerung der Umsetzarme wird vorzugsweise dadurch erreicht, dass jeder Umsetzarm für die Schwenkung um seine 1. Achse einen eigenen Antrieb und insbesondere einen eigenen Servomotor besitzt. Auch für die Schwenkung um seine 2. Achse kann jeder Umsetzarm einen weiteren separaten Antrieb und insbesondere einen weiteren Servomotor besitzen. Jeder Umsetzarm wird dann durch zwei unabhängig ansteuerbare Servomotoren angetrieben, die eine sehr schnelle und exakte Bewegung der Umsetzarme gewährleisten. Alternativ ist es jedoch auch möglich, die Schwenkung des Umsetzarms um seine 2. Achse mittels einer Steuerkulisse oder einer Steuerkurve in mechanischer Weise zu erreichen.

Der grundsätzliche konstruktive Aufbau jedes Umsetzarms umfasst ein Schwenkstück, das um die 1. Achse schwenkbar ist. An dem Schwenkstück ist ein Armteil um die 2. Achse schwenkbar gelagert. Wenn die Längsachse des Armteils mit der 2. Achse zusammenfällt, führt der Umsetzarm bei seiner Verstellung eine Bewegung im Wesentlichen innerhalb einer Ebene durch, die durch die Schwenkung um die 1. Achse aufgespannt wird. Bei zumindest einem der Umsetzarme ist das Armteil nicht direkt an dem Schwenkstück angebracht, sondern über ein Distanzstück in Abstand zu der 2. Achse gehalten. Aufgrund dieses Abstandes oder Versatzes setzt sich die Bahnkurve bei der Verstellung des Umsetzarmes aus der Schwenkung des Schwenkstücks um die 1. Achse und um die auf einer Kreisbahn mit Abstand erfolgende Schwenkung des Armteils um die 2. Achse zusammen, woraus sich eine gekrümmte Bewegungsbahn ergibt. Eine entsprechende gekrümmte Bewegungsbahn kann auch bei beiden Umsetzarmen vorgesehen sein, indem das Armteil jeweils über ein Distanzstück im Abstand zur zweiten Achse gehalten ist.

Die Bewegungsbahnen der beiden Umsetzarme sind so aufeinander abgestimmt, dass sie sich bei ihrer gegenläufigen Schwenkbewegung zwischen der Übernahmeposition und der Abgabeposition nicht berühren, sondern einander ausweichen und aneinander vorbeilaufen.

In einer bevorzugten Ausgestaltung der Erfindung ist vorgesehen, dass einer der Umsetzarme im Wesentlichen in einer Ebene um seine erste Achse schwenkt und dass der andere Umsetzarm auf einer gekrümmten Bahn um den in der Ebene schwenkenden Umsetzarm herumläuft.

In weiter bevorzugter Ausgestaltung der Erfindung ist vorgesehen, dass der gemeinsame Bereitstellungsplatz direkt an der Stanz- oder Schneidvorrichtung ausgebildet ist, mit der der Blister aus dem endlosen Blisterband herausgetrennt wird. Dabei wird derjenige Abschnitt des Blisterbandes, der den herauszutrennenden Blister bildet bereits vor Aktivierung der Stanz- oder Schneidvorrichtung von der Halteeinrichtung bzw. den Saugern des jeweiligen Umsetzarms ergriffen, woraufhin dann der Blister aus dem Blisterband herausgetrennt wird, wobei der Blister in dieser Phase bereits sicher von der Halteeinrichtung des Umsetzarms gehalten ist.

Vorzugsweise ist die Umsetzvorrichtung, an der der Stanz- oder Schneidvorrichtung entgegengesetzten Seite des Blisters angeordnet, so dass der Umsetzvorgang vollständig unabhängig von dem Stanz- und/oder Schneidvorgang geschehen kann und so dass ferner sichergestellt ist, dass es zu keiner Kollision der Umsetzvorrichtung mit dem mit Vorschub beaufschlagten Blisterband kommen kann.

Um unvollständige und/oder undichte Blister aussortieren zu können, kann in Weiterbildung der Erfindung ein Auswurfschacht vorgesehen sein, in den der Blister mittels der Umsetzvorrichtung eingebracht werden kann. Vorzugsweise weist der Auswurfschacht einen Abstreifer auf, mittels dessen der Blister von der Halteeinrichtung des jeweiligen Umsetzarms abstreifbar ist. Zusätzlich wird die Halteeinrichtung bzw. der Sauger des Umsetzarms deaktiviert, wobei der freigegebene Blister dann in den Auswurfschacht fällt und einer Sammelstation für auszusortierende Blister zugeführt wird.

Hinsichtlich des Verfahrens wird die oben genannte Aufgabe durch die kennzeichnenden Merkmalen des Anspruchs 14 gelöst. Dabei ist vorgesehen, dass die Umsetzarme in ihren Bewegungsabläufen so aufeinander eingestellt sind, dass sich einer der Umsetzarme in seiner Übernahmeposition am gemeinsamen Bereitstellungsplatz befindet, während der andere Umsetzarm sich in seiner Abgabeposition am gemeinsamen Ablegeplatz befindet. Die Umsetzarme werden auf unterschiedlichen Bahnkurven zwischen der Übernahmeposition am Bereitstellungsplatz und der Abgabeposition am Ablegeplatz hin- und herbewegt, wobei sie bei ihrer Verstellbewegung aneinander vorbeilaufen.

Zusätzliche Merkmale des Verfahrens ergeben sich auch aus der obenstehenden Beschreibung der Vorrichtung.

Weitere Einzelheiten und Merkmale der Erfindung sind aus der folgenden Beschreibung eines Ausführungsbeispiels unter Bezugnahme auf die Zeichnung ersichtlich. Es zeigen:
- Figur 1: eine schematische perspektivische Ansicht einer erfindungsgemäßen Umsetzvorrichtung, wobei sich einer der Umsetzarme in der Übernahmeposition und der andere Umsetzarm in der Abgabeposition befindet,
- Figur 2: die Umsetzvorrichtung gemäß Fig. 1 nach Übernahme eines Blisters sowie Abgabe des umgesetzten Blisters,
- Figur 3: die Umsetzvorrichtung gemäß Fig. 2 in einer 1. Phase der Verstellung der Umsetzarme,
- Figur 4: die Umsetzvorrichtung gemäß Fig. 3 in einer 2. Phase der Verstellung der Umsetzarme,
- Figur 5: die Umsetzvorrichtung gemäß Fig. 4 in einer 3. Phase der Verstellung der Umsetzarme,
- Figur 6: die Umsetzvorrichtung gemäß Fig. 5, wobei die Umsetzarme ihre Übernahmeposition bzw. Ablegeposition erreicht haben, und
- Figur 7: die Umsetzvorrichtung gemäß Fig. 7 nach Übernahme eines Blisters sowie Abgabe des umgesetzten Blisters.

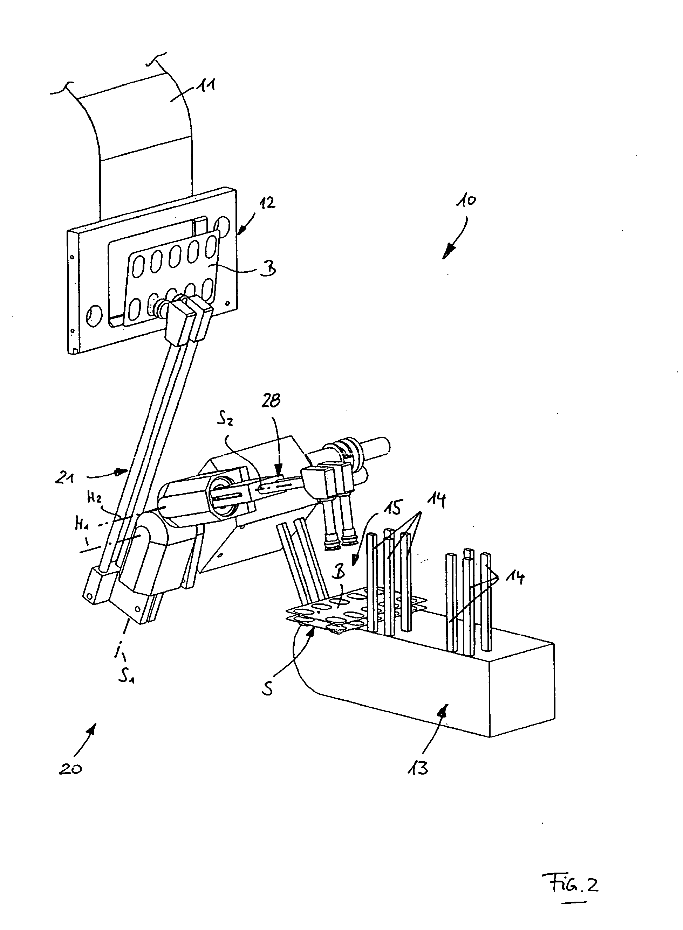

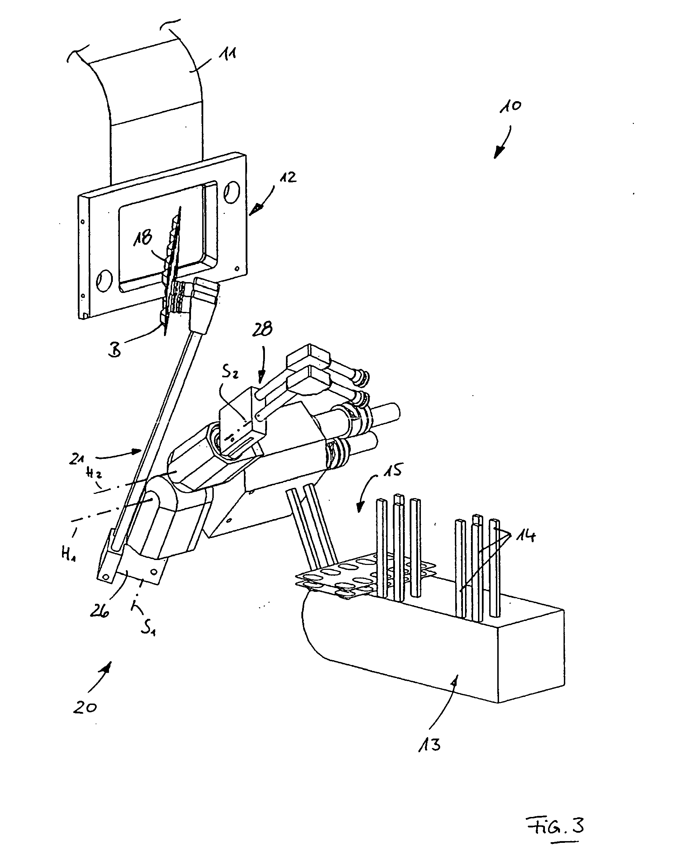

In einer in den Figuren nur ausschnittsweise dargestellten Blister-Verpackungsmaschine 10 wird in herkömmlicher Weise ein endloses Blisterband 11 hergestellt, das eine Vielzahl von Näpfen 18 (siehe Fig. 3) aufweist, in denen jeweils zumindest ein Produkt abgelegt ist, wobei die Näpfe 18 in bekannter Weise mit einer Deckfolie verschlossen sind. Das Blisterband 11 wird einer nur schematisch dargestellten Schneid- oder Stanzvorrichtung 12 zugeführt, mittels der aus dem Blisterband 11 ein streifenförmiger Blister B (siehe Fig. 2) herausgetrennt wird.

Die Blister-Verpackungsmaschine 10 umfasst des Weiteren eine weiterführende Fördervorrichtung 13, die nur schematisch als ein endlos umlaufendes Förderband dargestellt ist, das auf seiner Außenseite eine Vielzahl von abstehenden, auf Abstand angeordneten Fingern 14 trägt, zwischen denen jeweils Zellen gebildet sind. Eine der Zellen bildet einen einzelnen Ablegeplatz 15 bei der nachfolgend beschriebenen Umsetzung der Blister. Die Blister B, die mittels der Stanz- oder Schneidvorrichtung 12 aus dem Blisterband 11 herausgetrennt werden, können mittels einer Umsetzvorrichtung 20 an der Stanz- oder Schneidvorrichtung 12 aufgenommen werden, so dass dort ein einzelner Bereitstellungsplatz für die Blister B gebildet ist. Die Blister werden nach ihrer Aufnahme von der Umsetzvorrichtung 20 in die erste Zelle der Fördervorrichtung 13 eingesetzt und am dortigen Ablegeplatz 15 unter Bildung eines mehrere Blister B umfassenden Stapels S (s. Fig. 2) abgelegt.

Die Umsetzvorrichtung 10 umfasst ein gestellfestes Antriebsgehäuse 17, an dem ein 1. schwenkbarer Umsetzarm 21 und ein 2. schwenkbarer Umsetzarm 28 gelagert sind.

Der 1. schwenkbare Umsetzarm 21 umfasst ein Schwenkstück 27, das um eine 1. Achse H₁ schwenkbar am Antriebsgehäuse 17 gelagert ist. Der Schwenkantrieb für die Schwenkbewegung um die 1. Achse H₁ ist ein nicht dargestellter Servomotor. Der 1. Umsetzarm 21 umfasst des Weiteren ein aus zwei parallel Stangen 22a, 22b aufgebautes Armteil 22. Die beiden Stangen 22a und 22b sind an ihrem unteren, nahe dem Schwenkstück 27 liegenden Ende an einem Lagerblock 25 verbunden, der über ein Distanzstück 26 um eine 2. Achse S₁ schwenkbar am Schwenkstück 27 gelagert ist. Die 2. Achse S₁ verläuft im Wesentlichen senkrecht zur 1. Achse H₁ und parallel zur Längserstreckung der Stangenteile 22a und 22b. Die zweite Achse S₁ besitzt zur Längserstreckung des Armteils 22 aufgrund des Distanzstückes 26 einen Versatz, so dass die Schwenkung des Armteils 22 auf einem Kreisbogen in deutlichem Abstand zu der 2. Achse S₁ erfolgt. Auch der Schwenkantrieb für die Schwenkung um die 2. Achse S₁ wird von einem nicht dargestellten, weiteren Servomotor bewirkt.

An ihrem oberen, dem Lagerblock 25 abgewandten freien Ende tragen die Stangenteile 22a, 22b jeweils einen Sauger 23, 24 bzw. entsprechende Saugköpfe, die in bekannter Weise mit Unterdruck beaufschlagbar sind. Bei Aktivierung der Sauger 23, 24 kann ein sich am Bereitstellungsplatz befindender Blister von dem 1. Umsetzarm aufgenommen und gehalten werden.

Der 2. schwenkbare Umsetzarm 28 besitzt einen ähnlichen Aufbau wie der 1. schwenkbare Umsetzarm 21. Auch hierbei ist ein schwenkbar am Antriebsgehäuse 17 gelagertes und mittels eines nicht dargestellten Servomotors um eine 1. Achse H₂ schwenkbares Schwenkstück 33 vorgesehen, an dem ein Armteil 29 schwenkbar gehalten ist. Die 1. Achse H₂ des 2. Umsetzarms 28 verläuft parallel zur 1. Achse H₁ des 1. Umsetzarms 21. Das Armteil 29 des 2. Umsetzarms 28 weist ebenfalls 2. Stangenteile 29a und 29b auf, die an ihrem unteren Ende nahe dem Schwenkteil 33 an einem Lagerblock 32 angebracht sind.

Der Lagerblock 32 ist um eine 2. Achse S₂ schwenkbar am Schwenkteil 33 gelagert, wobei auch die Schwenkbewegung um die 2. Achse S₂ des 2. Umsetzarms 28 mittels eines nicht dargestellten weiteren Servomotors erfolgt. Die 2. Schwenkachse S₂ des 2. Umsetzarms 28 verläuft im Wesentlichen senkrecht zur 1. Achse H₂ des 2. Umsetzarms 28 und entlang oder in unmittelbarer Nähe parallel zur Längsachse des Armteils 29. Am oberen freien Ende des Armteils 29 sind zwei Sauger 30, 31 vorgesehen, mit denen ein Blister B gehalten werden kann.

Da die 2. Achse S₂ des 2. Umsetzarms 28 entlang oder nahe der Längsmittelachse des Armteils 29 verläuft, führt das Armteil bei Schwenkung um die 1. Achse H₁ eine im Wesentlichen in einer Ebene liegende Bewegung aus, wobei das Armteil 29 um sich selbst sowie die 2. Achse S₂ gedreht wird.

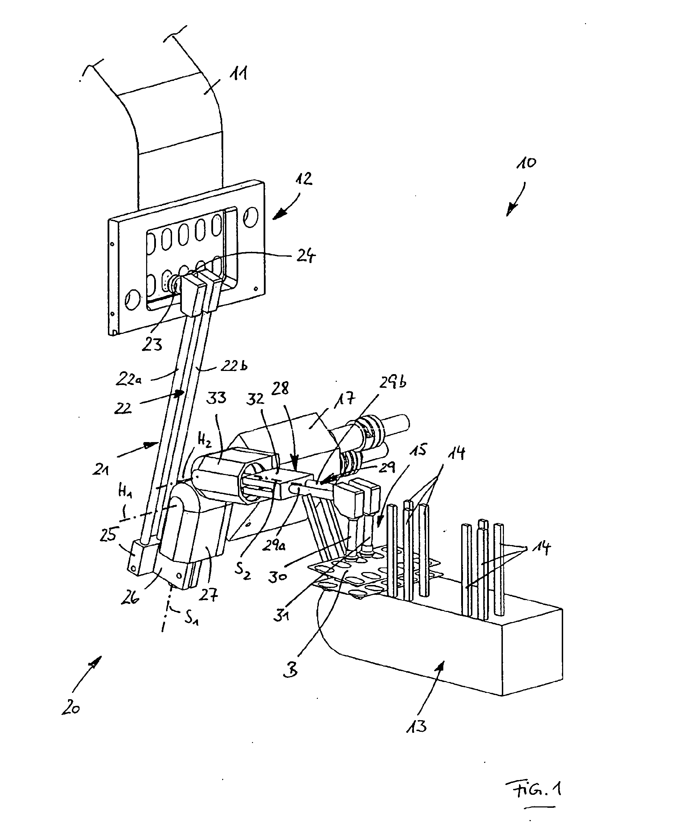

Wie die Fig. 1 zeigt, ist die Umsetzvorrichtung 20 zwischen dem an der Schneid- oder Stanzvorrichtung 12 ausgebildeten, für beide Umsetzarme 21, 28 gemeinsamen Bereitstellungsplatz und dem an der weiterführenden Fördervorrichtung 13 ausgebildeten, für beide Umsetzarme 21, 28 gemeinsamen Ablegeplatz angeordnet, so dass die Blister B bei der Umsetzbewegung um ca. 180° gedreht werden müssen, was durch Schwenkung der Armteile 22 bzw. 29 um die jeweils zweite Achse S₁ bzw. S₂ erreicht wird.

Im Folgenden werden anhand der Fig. 1 bis 7 das Umsetzen eines Blisters B von dem Bereitstellungsplatz auf den Ablegeplatz sowie das Zurückführen des Umsetzarms nach Abgabe des Blisters näher erläutert.

In der in Fig. 1 dargestellten Stellung befindet sich der erste Umsetzarm 21 in seiner Übernahmeposition, in der seine Sauger 23, 24 an dem an der Schneid- oder Stanzvorrichtung 12 gebildeten Bereitstellungsplatz angeordnet sind. Die Sauger 23 und 24 liegen an dem Blisterband 11 an und haben dieses mittels Unterdruck angesaugt, wobei unmittelbar darauf mittels der Stanz- oder Schneidvorrichtung 12 aus dem Blisterband 11 ein Blister B herausgetrennt wird.

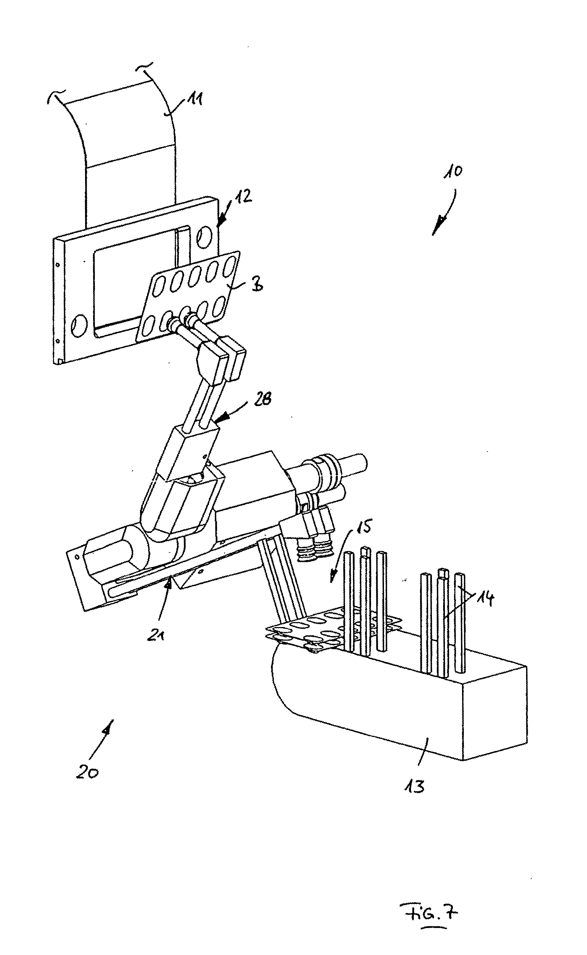

Gleichzeitig befindet sich der 2. Umsetzarm 28 in seiner Abgabeposition, in der der von seinen Saugern 30 und 31 gehaltene Blister B am Ablegeplatz 15 in der Zelle der Fördervorrichtung 13 angeordnet ist. Durch Aufhebung des Unterdrucks an den Saugern 30 und 31 des 2. Umsetzarms 29 wird der Blister B freigegeben. Fig. 1 zeigt eine Betriebsart, bei der in der Zelle der Fördervorrichtung 13 ein aus mehreren Blistern B aufgebauter Blisterstapel S (siehe Fig. 2 und 7) gebildet wird, jedoch kann der abgelegte Blister auch als Einzelblister in der Fördervorrichtung 13 abtransportiert werden.

Unmittelbar nach dem Heraustrennen des Blisters B aus dem Blisterband 11 wird der 1. Umsetzarm 21 mit dem von ihm gehaltenen Blister B in die Abgabeposition verstellt, während gleichzeitig der 2. Umsetzarm 28 nach Ablegen des Blisters B auf der Fördervorrichtung 13 in seine Übernahmeposition am Bereitstellungsplatz verschwenkt wird. Wie die Fig. 2, 3 und 4 zeigen, führen beide Umsetzarme 21 und 28 eine Schwenkbewegung aus, die durch Überlagerung ihrer Schwenkung um jeweils ihre 1. Achse H₁ bzw. H₂ und ihrer Schwenkung um ihre 2. Achse S₁ bzw. S₂ gebildet ist. Der 2. Umsetzarm 28 schwenkt im Wesentlichen in einer Ebene, die durch die Schwenkung des Schwenkstücks 33 um die 1. Achse H₂ bestimmt ist, wobei gleichzeitig das Armteil 29 im Wesentlichen um sich selbst gedreht wird, um die Ausrichtung der Sauger 30, 31 in gewünschter Weise zu verändern.

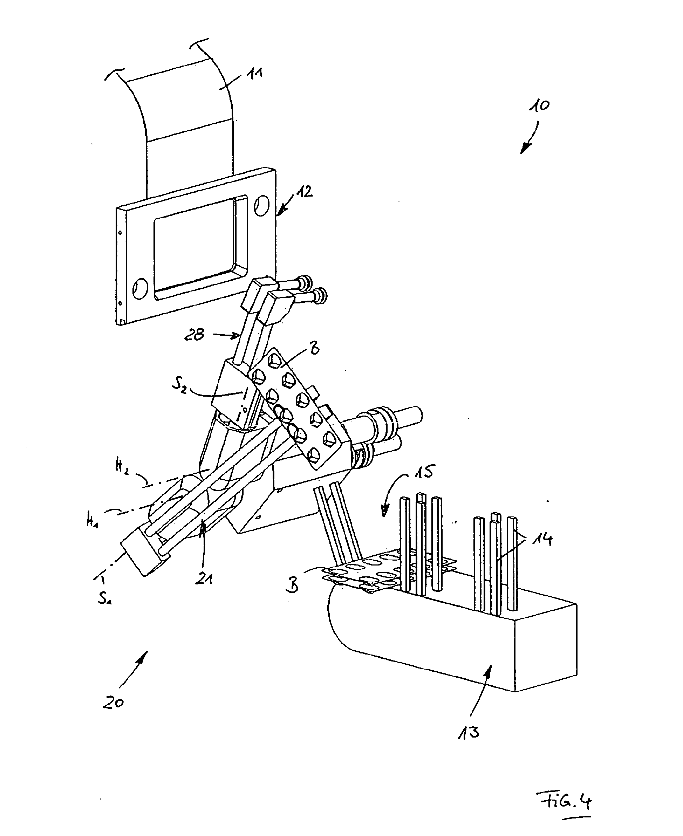

Der 1. Umsetzarm 21 folgt aufgrund des Distanzstücks 26 und des damit verbundenen wesentlich größeren Versatzes der Längsachse des Armteils 22 relativ zu der 2. Achse S₁ einer ausweichenden, gekrümmten Bewegungsbahn, so dass er der Bewegung des 2. Umsetzarms 28 seitlich ausweichen kann, wie die Fig. 3 und 4 zeigen.

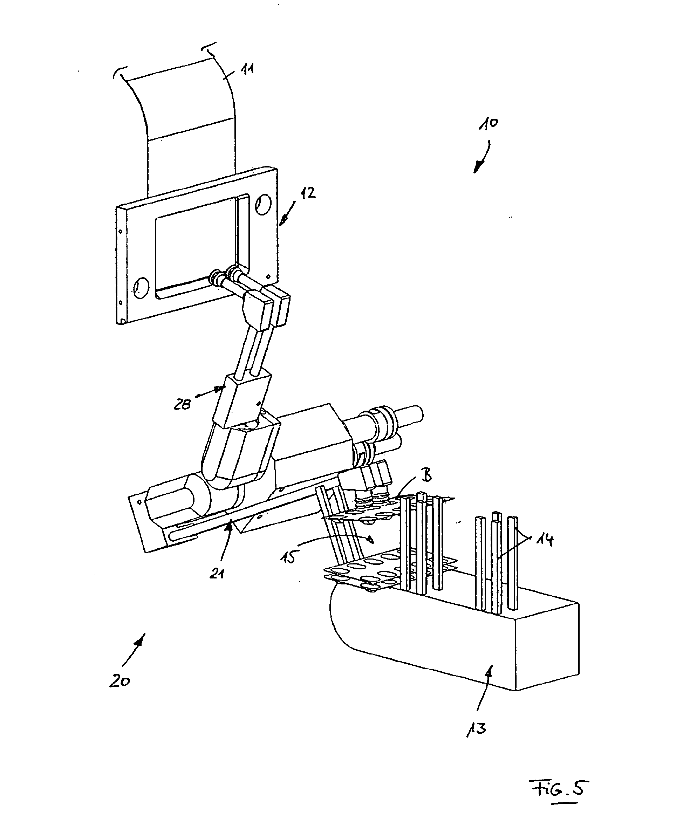

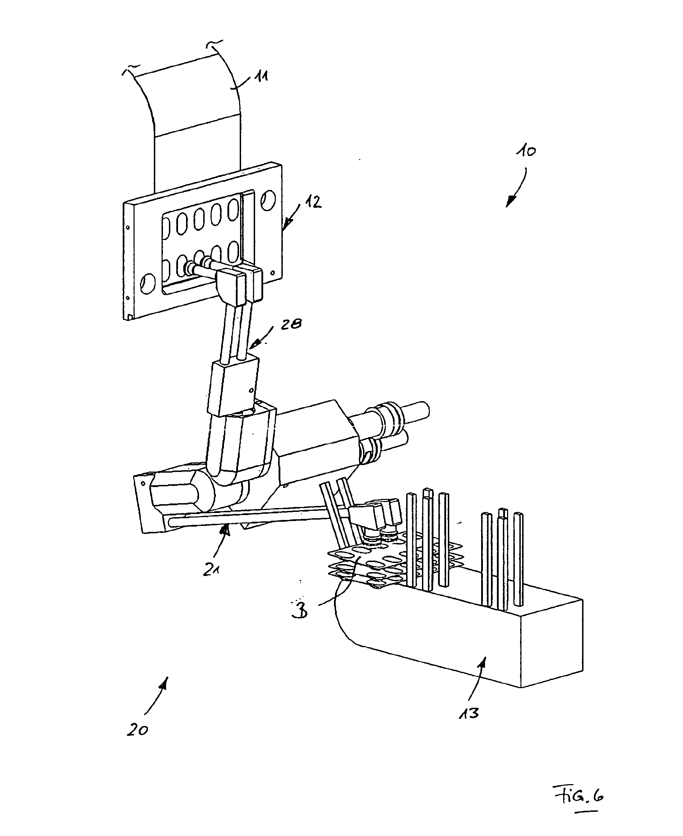

In der in Fig. 5 gezeigten Stellung ist die Drehung der Umsetzarme 21 und 28 um ihre jeweilige 2. Achse S₁ bzw. S₂ abgeschlossen und die Umsetzarme haben die gewünschte Orientierung ihrer Sauger 23, 24 bzw. 30, 31 erreicht. Durch eine weitere Schwenkung um die jeweilige 1. Achse H₁ bzw. H₂ werden die Sauger 30, 31 des 2. Umsetzarms 28 in ihre Übernahmeposition am Bereitstellungsplatz gebracht (siehe Fig. 6), während gleichzeitig die Sauger 23, 24 des 1. Umsetzarms 21 den von ihnen gehaltenen Blister B in die Zelle der Fördervorrichtung 13 einsetzen und nach Erreichen der Abgabeposition am Ablegeplatz 15 freigeben (siehe Fig. 6).

Unmittelbar darauf übernimmt der 2. Umsetzarm 28 einen neu ausgestanzten Blister B und kehrt auf seiner im Wesentlichen in einer Ebene liegenden Bewegungsbahn in die in Fig. 1 gezeigte Abgabestellung zurück. Gleichzeitig kehrt der 1.

Umsetzarm 21 nach Abgabe des Blisters B auf seiner gekrümmten Bewegungsbahn, auf der er zur Vermeidung eines Konfliktes den 2. Umsetzarm umläuft, in seine in Fig. 1 dargestellte Übernahmeposition zurück, woraufhin der erläuterte Zyklus von neuem abläuft.

## Patentansprüche

1. Umsetzvorrichtung zum Umsetzen eines Produkts (B) in einer Verpackungsmaschine, wobei das Produkt (B) mittels der Umsetzvorrichtung (20) an einem Bereitstellungsplatz aufnehmbar und an einem Ablegeplatz (15) ablegbar ist und die Umsetzvorrichtung (20) einen 1. schwenkbaren Umsetzarm (21) und einen 2. schwenkbaren Umsetzarm (28) umfasst, die jeweils eine Halteeinrichtung (23, 24, 30, 31) für das Produkt (B) aufweisen, **dadurch gekennzeichnet, dass** die Umsetzarme (21, 28) auf unterschiedlichen Bahnkurven unter Ausführung reversierender, hin- und hergehender Schwenkbewegungen zwischen einer Übernahmeposition am gemeinsamen Bereitstellungsplatz und einer Abgabeposition am gemeinsamen Ablegeplatz (15) verstellbar sind und bei ihrer Verstellbewegung aneinander vorbeilaufen.

2. Umsetzvorrichtung nach Anspruch 1, **dadurch gekennzeichnet, dass** jeder Umsetzarm (21, 28) um eine 1. Achse (H₁, H₂) und eine dazu im Wesentlichen senkrecht verlaufende 2. Achse (S₁, S₂) schwenkbar ist.

3. Umsetzvorrichtung nach Anspruch 2, **dadurch gekennzeichnet, dass** die ersten Achsen (H₁, H₂) parallel zueinander verlaufen.

4. Umsetzvorrichtung nach Anspruch 2 oder 3, **dadurch gekennzeichnet, dass** die zweiten Achsen (S₁, S₂) in Längsrichtung des jeweiligen Umsetzarms (21, 28) oder parallel dazu verlaufen.

5. Umsetzvorrichtung nach einem der Ansprüche 2 bis 4, **dadurch gekennzeichnet, dass** jeder Umsetzarm (21, 28) für die Schwenkung um die erste Achse (H₁, H₂) einen eigenen Antrieb, insbesondere einen Servomotor, besitzt.

6. Umsetzvorrichtung nach einem der Ansprüche 2 bis 5, **dadurch gekennzeichnet, dass** jeder Umsetzarm (21, 28) für die Schwenkung um die zweite Achse (S₁, S₂) einen weiteren Antrieb und insbesondere einen weiteren Servomotor besitzt.

7. Umsetzvorrichtung nach einem der Ansprüche 2 bis 6, **dadurch gekennzeichnet, dass** einer der Umsetzarme (28) im Wesentlichen in einer Ebene um seine erste Achse (H₂) schwenkt und dass der andere Umsetzarm (21) auf einer gekrümmten Bahn um den in der Ebene schwenkenden Umsetzarm (28) herumläuft.

8. Umsetzvorrichtung nach Anspruch 7, **dadurch gekennzeichnet, dass** der andere Umsetzarm (21) über ein Distanzstück (26) in Abstand zu seiner zweiten Achse (S₁) gehalten ist.

9. Umsetzvorrichtung nach einem der Ansprüche 1 bis 8, **dadurch gekennzeichnet, dass** das Produkt (P) ein Blister ist.

10. Umsetzvorrichtung nach einem der Ansprüche 1 bis 9, **dadurch gekennzeichnet, dass** die Haltevorrichtung (23, 24, 30, 31) zumindest einen Sauger aufweist.

11. Umsetzvorrichtung nach Anspruch 9 oder 10, **dadurch gekennzeichnet, dass** der Bereitstellungsplatz an einer Stanz- oder Schneidvorrichtung (12) ausgebildet ist, mit der der Blister aus einem Blisterband (11) heraustrennbär ist.

12. Umsetzvorrichtung nach Anspruch 11, **dadurch gekennzeichnet, dass** die Umsetzvorrichtung (10) an der der Stanz- oder Schneidvorrichtung (12) entgegengesetzten Seite des Blisters angeordnet ist.

13. Umsetzvorrichtung nach einem der Ansprüche 1 bis 12, **dadurch gekennzeichnet, dass** der Ablegeplatz (15) auf einer weiterführenden Fördervorrichtung (13) ausgebildet ist.

14. Verfahren zum Umsetzen eines Produkts (B) in einer Verpackungsmaschine, wobei das Produkt (B) mittels einer Umsetzvorrichtung (20) an einem Bereitstellungsplatz aufgenommen und an einem Ablegeplatz (15) abgelegt wird und wobei die Umsetzvorrichtung (10) einen 1. schwenkbaren Umsetzarm (21) und einen 2. schwenkbaren Umsetzarm (28) umfasst, die jeweils eine Haltevorrichtung (23, 24, 30, 31) für das Produkt (B) aufweisen, wobei die Umsetzarme (21, 28) in ihren Bewegungsabläufen so zueinander eingestellt sind, dass sich einer der Umsetzarme (21) in einer Übernahmeposition am gemeinsamen Bereitstellungsplatz befindet, während der andere Umsetzarm (28) sich in einer Abgabeposition am gemeinsamen Ablegeplatz (15) befindet, **dadurch gekennzeichnet, dass** die Umsetzarme (21, 28) auf unterschiedlichen Bahnkurven unter Ausführung reversierender, hin- und hergehender Schwenkbewegungen zwischen der Übernahmeposition und der Abgabeposition bewegt werden und dabei aneinander vorbeilaufen.

15. Verfahren nach Anspruch 14, **dadurch gekennzeichnet, dass** jeder Umsetzarm (21, 28) um eine erste Achse (H₁, H₂) und eine dazu im Wesentlichen senkrecht verlaufende zweite Achse (S₁, S₂) geschwenkt wird.

16. Verfahren nach Anspruch 15, **dadurch gekennzeichnet, dass** die ersten Achsen (H₁, H₂) parallel zueinander verlaufen.

17. Verfahren nach Anspruch 15 oder 16, **dadurch gekennzeichnet, dass** die zweiten Achsen (S₁, S₂) in Längsrichtung des jeweiligen Umsetzarms (21, 28) oder parallel dazu verlaufen.

18. Verfahren nach einem der Ansprüche 15 bis 17, **dadurch gekennzeichnet, dass** einer der Umsetzarme (28) im Wesentlichen in einer Ebene um seine erste Achse (H₂) geschwenkt wird und dass der andere Umsetzarm (21) auf einer gekrümmten Bahn um den in der Ebene schwenkenden Umsetzarm (28) herumläuft.

19. Verfahren nach einem der Ansprüche 14 bis 18, **dadurch gekennzeichnet, dass** die Produkte (B) auf dem Ablegeplatz (15) gestapelt werden.

## Claims

1. Relocating device for relocating a product (B) in a packaging machine, wherein the product (B) can be received at a supply location using the relocating device (20), and can be disposed at a deposition location (15), and wherein the relocating device (20) comprises a first pivotable relocating arm (21) and a second pivotable relocating arm (28) which each comprise a holding means (23, 24, 30, 31) for the product (B), **characterized in that** the relocating arms (21, 28) can be adjusted along different trajectories, while executing reversing, back and forth pivoting motion, between a transfer position at the common supply location and a deposition position at the common deposition location (15), to pass each other during their adjustment motion.

2. Relocating device according to claim 1, **characterized in that** each relocating arm (21, 28) can be pivoted about a first axis (H₁,H₂) and a second axis (S₁,S₂) which extends substantially perpendicularly thereto.

3. Relocating device according to claim 2, **characterized in that** the first axes (H₁, H₂) extend parallel to each other.

4. Relocating device according to claim 2 or 3, **characterized in that** the second axes (S₁, S₂) extend in the longitudinal direction of the respective relocating arm (21, 28) or parallel thereto.

5. Relocating device according to any one of the claims 2 through 4, **characterized in that** each relocating arm (21, 28) has its own drive for pivoting about the first axis (H₁,H₂), in particular, a servomotor.

6. Relocating device according to any one of the claims 2 through 5, **characterized in that** each relocating arm (21, 28) has a further drive and, in particular, a further servomotor for pivoting about the second axis (S₁,S₂).

7. Relocating device according to any one of the claims 2 through 6, **characterized in that** one of the relocating arms (28) pivots substantially in one plane about its first axis (H₂) and the other relocating arm (21) extends on a curved trajectory about the relocating arm (28) that pivots in a plane.

8. Relocating device according to claim 7, **characterized in that** the other relocating arm (21) is held at a separation from its second axis (S₁) by a spacer (26).

9. Relocating device according to any one of the claims 1 through 8, **characterized in that** the product (P) is a blister.

10. Relocating device according to any one of the claims 1 through 9, **characterized in that** the holding means (23, 24, 30, 31) comprises at least one suctioning device.

11. Relocating device according to claim 9 or 10, **characterized in that** the supply location is formed at a punching or cutting device (12) for separating a blister from a blister band (11).

12. Relocating device according to claim 11, **characterized in that** the relocating device (10) is disposed on the side of the blister opposite to the punching or cutting device (12).

13. Relocating device according to any one of the claims 1 through 12, **characterized in that** the deposition location (15) is formed on a continuous conveying device (13).

14. Method for relocating a product (B) in a packaging machine, wherein the product (B) is received at a supply location using a relocating device (20) and is disposed at a deposition location (15), wherein the relocating device (10) comprises a first pivotable relocating arm (21) and a second pivotable relocating arm (28) which each comprise a holding means (23, 24, 30, 31) for the product (B), wherein the motions of the relocating arms (21, 28) are adjusted relative to each other such that one of the relocating arms (21) is in a transfer position at the common supply location, while the other relocating arm (28) is in a deposition position on the common deposition location (15), **characterized in that** the relocating arms (21, 28) move at different trajectories, while executing reversing, back and forth pivoting motion, between the transfer position and the deposition position, thereby passing each other.

15. Method according to claim 14, **characterized in that** each relocating arm (21, 28) is pivoted about a first axis (H₁, H₂) and a second axis (S₁, S₂) which extends substantially perpendicularly thereto.

16. Method according to claim 15, **characterized in that** the first axes (H₁,H₂) extend substantially parallel to each other.

17. Method according to claim 15 or 16, **characterized in that** the second axes (S₁,S₂) extend in the longitudinal direction of the respective relocating arm (21, 28) or parallel thereto.

18. Method according to any one of the claims 15 through 17, **characterized in that** one of the relocating arms (28) is pivoted substantially in one plane about its first axis (H₂) and wherein the other relocating arm (21) extends on a curved path about the relocating arm (28) which pivots in a plane.

19. Method according to any one of the claims 14 though 18, **characterized in that** the products (B) are stacked at the deposition location (15).

## Revendications

1. Dispositif de transfert pour le transfert d'un produit (B) dans une machine de conditionnement, dans lequel le produit (B) peut être prélevé à un emplacement de mise à disposition par le dispositif de transfert (20) et déposé à un emplacement de dépôt (15) et le dispositif de transfert (20) comprend un premier bras de transfert pivotant (21) et un deuxième bras de transfert pivotant (28) présentant chacun un dispositif de maintien (23,24,30,31) pour le produit (B), **caractérisé en ce que** les bras de transfert (21, 28) peuvent être réglés pour des trajectoires différentes en effectuant des mouvements pivotants de va et vient réversibles entre une position d'enlèvement à l'emplacement de mise à disposition commun et une position de dépôt à l'emplacement de dépôt (15) commun et **en ce qu'**ils passent l'un devant l'autre au cours de leur mouvement.

2. Dispositif de transfert selon la revendication 1, **caractérisé en ce que** chaque bras de transfert (21, 28) peut pivoter autour d'un premier axe (H₁, H₂) et d'un deuxième axe (S₁, S₂) sensiblement perpendiculaire à celui-ci.

3. Dispositif de transfert selon la revendication 2, **caractérisé en ce que** les premiers axes (H₁, H₂) sont parallèles entre eux.

4. Dispositif de transfert selon la revendication 2 ou 3, **caractérisé en ce que** les deuxièmes axes (S₁, S₂) s'étendent dans le sens longitudinal de chacun des bras de transfert (21, 28) ou parallèles à ceux-ci.

5. Dispositif de transfert selon l'une quelconque des revendications 2 à 4, **caractérisé en ce que** chaque bras de transfert (21, 28) est équipé de son propre dispositif d'actionnement, plus particulièrement d'un servomoteur, pour le basculement autour du premier axe (H₁, H₂).

6. Dispositif de transfert selon l'une quelconque des revendications 2 à 5, **caractérisé en ce que** chaque bras de transfert (21, 28) est équipé d'un dispositif d'actionnement supplémentaire, et plus particulièrement d'un servomoteur supplémentaire, pour le basculement autour du deuxième axe (S₁, S₂).

7. Dispositif de transfert selon l'une quelconque des revendications 2 à 6, **caractérisé en ce qu'**un des bras de transfert (28) pivote sensiblement dans un plan autour de son premier axe (H₂) et **en ce que** l'autre bras de transfert (21) pivote le long d'une trajectoire curviligne autour du bras de transfert (28) pivotant dans le plan.

8. Dispositif de transfert selon la revendication 7, **caractérisé en ce que** l'autre bras de transfert (21) est maintenu à distance de son deuxième axe (S₁) par une entretoise (26).

9. Dispositif de transfert selon l'une quelconque des revendications 1 à 8, **caractérisé en ce que** le produit (B) est un blister.

10. Dispositif de transfert selon l'une quelconque des revendications 1 à 9, **caractérisé en ce que** le dispositif de maintien (23, 24, 30, 31) présente au moins un dispositif d'aspiration.

11. Dispositif de transfert selon la revendication 9 ou 10, **caractérisé en ce que** l'emplacement de mise à disposition est formé sur un dispositif d'estampage ou de découpage (12) au moyen duquel le blister est détaché d'une bande de blisters (11).

12. Dispositif de transfert selon la revendication 11, **caractérisé en ce que** le dispositif de transfert (10) est disposé sur le côté du blister opposé au dispositif d'estampage ou de découpage (12).

13. Dispositif de transfert selon l'une quelconque des revendications 1 à 12, **caractérisé en ce que** l'emplacement de dépôt (15) est formé sur un dispositif de transport (13) à suivre.

14. Procédé de transfert d'un produit (B) dans une machine de conditionnement, dans lequel le produit (B) est prélevé à un emplacement de mise à disposition par un dispositif de transfert (20) et déposé à un emplacement de dépôt (15) et dans lequel le dispositif de transfert (10) comprend un premier bras de transfert pivotant (21) et un deuxième bras de transfert pivotant (28) présentant chacun un dispositif de maintien (23, 24, 30, 31) pour le produit (B), dans lequel les bras de transfert (21, 28) sont réglés de telle manière l'un par rapport à l'autre dans leurs phases de mouvements qu'un des bras de transfert (21) se trouve dans une position d'enlèvement à l'emplacement commun de mise à disposition pendant que l'autre bras de transfert (28) se trouve dans une position de dépôt à l'emplacement commun de dépôt (15), **caractérisé en ce que** les bras de transfert (21, 28) sont mis en mouvement sur des trajectoires différentes en effectuant des mouvements pivotants de va et vient réversibles entre la position d'enlèvement et la position de dépôt et passent ainsi l'un devant l'autre.

15. Procédé selon la revendication 14, **caractérisé en ce que** chaque bras de transfert (21, 28) est pivoté autour d'un premier axe (H₁, H₂) et un deuxième axe (S₁, S₂) sensiblement perpendiculaire à celui-ci.

16. Procédé selon la revendication 15, **caractérisé en ce que** les premiers axes (H₁, H₂) sont parallèles entre eux.

17. Procédé selon la revendication 15 ou 16, **caractérisé en ce que** les deuxièmes axes (S₁, S₂) s'étendent dans le sens longitudinal de chacun des bras de transfert (21, 28) ou parallèles à ceux-ci.

18. Procédé selon l'une quelconque des revendications 15 à 17, **caractérisé en ce qu'**un des bras de transfert (28) pivote sensiblement dans un plan autour de son premier axe (H₂) et **en ce que** l'autre bras de transfert (21) pivote le long d'une trajectoire curviligne autour du bras de transfert (28) pivotant dans le plan.

19. Procédé selon l'une quelconque des revendications 14 à 18, **caractérisé en ce que** les produits (B) sont empilés sur l'emplacement de dépôt (15).
